# EUROPÄISCHE PATENTSCHRIFT

(11) **EP 3 627 317 B1**
(45) Veröffentlichungstag und Bekanntmachung des Hinweises auf die Patenterteilung: **22.06.2022**
(21) Anmeldenummer: 19194117.8
(22) Anmeldetag: 28.08.2019
(51) Int. Cl.: G06F 9/451, G06F 9/445, G06F 3/04817, F04D 19/04, F04D 27/00

(54) **VERFAHREN ZUM KONFIGURIEREN EINES VAKUUMGERÄTS**
METHOD FOR CONFIGURING A VACUUM DEVICE
PROCÉDÉ DE CONFIGURATION D'UN APPAREIL SOUS VIDE

(43) Veröffentlichungstag der Anmeldung: 25.03.2020
(73) Patentinhaber: Pfeiffer Vacuum GmbH, 35614 Aßlar (DE)
(72) Erfinder: Böttcher, Jochen, 35394 Gießen (DE)
(74) Vertreter: Manitz Finsterwald Patent- und Rechtsanwaltspartnerschaft mbB

(56) Entgegenhaltungen:
- DE-U1-202018 102 484

## Beschreibung

Die Erfindung betrifft ein Verfahren zum Konfigurieren eines Vakuumgeräts, insbesondere eines Vakuumpumpsystems, wobei das Vakuumgerät eine Steuereinrichtung aufweist. Ferner wird ein Vakuumgerät offenbart, das auf diese Weise konfiguriert werden kann.

Aus der DE 20 2018 102 484 U1 ist ein Verfahren zur Steuerung und Regelung eines Gasdrucks mittels Konfiguration eines Vakuumgeräts, welches eine Steuer- und Anzeigeeinrichtung aufweist, bekannt.

Die Konfiguration von Vakuumgeräten erfordert regelmäßig Expertenwissen. Der Benutzer eines Vakuumgeräts muss insbesondere genau mit der Hardware des Vakuumgeräts vertraut sein, um die für den Betrieb des Vakuumgeräts gewünschten Funktionen der Hardware festlegen zu können. Beispielsweise muss der Benutzer Kenntnis über die Vielzahl unterschiedlicher Anschlüsse besitzen, um einen für den Betrieb des Vakuumgeräts beabsichtigten Signalflussplan zu implementieren. Dies betrifft etwa moderne Vakuumpumpencontroller (z.B. Pfeiffer Vacuum TC/TCP/TM), Messröhrencontroller (z.B. Pfeiffer Vacuum TPG, DPG) oder Bediengeräte (z.B. Digital Control Unit, DCU, insbesondere von Pfeiffer Vacuum). Bislang ist ein Anschlusstyp in der Regel einem bestimmten Gerät fest zugeordnet (z.B. X3 an Pfeiffer Vacuum TC 110). Ferner sind die Funktionen einzelner Anschlüsse noch häufig fest vorgegeben oder nur in engen Grenzen modifizierbar. Mit den zunehmenden Möglichkeiten moderner digitaler Systeme ergeben sich jedoch immer größere Möglichkeiten zur freien Konfiguration, die nicht mehr leicht zu überblicken sind. Hiermit einhergehend zeichnet sich auch eine größere Vielfalt verschiedener Hardwarekonfigurationen ab, sodass bereits die Identifizierung der verschiedenen Anschlüsse keine triviale Aufgabe ist.

Eine weitere Herausforderung besteht darin, dass der Benutzer die durch das Gerät festgelegten Möglichkeiten zur Programmierung anwenden können muss. So wird erwartet, dass der Benutzer oder Installateur die zur Konfiguration vorgesehenen Programmiersprachen beherrscht und über das notwendige Wissen der verwendeten Protokolle verfügt. Derartige Anforderungen an den Benutzer sind nachteilig, da auch im Falle einer Abänderung einer bestehenden Konfiguration im Feld stets speziell geschultes Personal benötigt wird. Kurzfristige Änderungen der Konfiguration sind daher in aller Regel kaum oder nur mit hohen Kosten durchführbar.

Ein weiteres Problem liegt in einem erhöhten Fehlerrisiko. Mit zunehmender Komplexität und Typenvielfalt heutiger Vakuumgeräte ist selbst bei gut ausgebildetem Personal nicht ausgeschlossen, dass fehlerhafte Konfigurationen vorgenommen werden. Es ist davon auszugehen, dass sich dieses Problem durch die zunehmende Digitalisierung in Zukunft noch weiter verschärfen wird.

Es ist eine Aufgabe der Erfindung, die Konfiguration von Vakuumgeräten zu vereinfachen.

Die Aufgabe wird gelöst durch die Gegenstände der unabhängigen Ansprüche.

Ein erfindungsgemäßes Verfahren zum Konfigurieren eines Vakuumgeräts, welches zumindest eine Steuereinrichtung und eine Anzeigeeinrichtung aufweist, umfasst zumindest folgende Schritte: Anzeigen wenigstens eines grafischen Elements an der Anzeigeeinrichtung, wobei dem grafischen Element ein Teil der Steuereinrichtung zugeordnet ist, und wobei das grafische Element erfindungsgemäß eine grafische Darstellung zumindest des dem grafischen Element zugeordneten Teils der Steuereinrichtung enthält; Auswählen des grafischen Elements, um ein ausgewähltes grafisches Element zu bestimmen; und Zuweisen einer Betriebsfunktion zu dem ausgewählten grafischen Element, um das Vakuumgerät bezüglich des dem ausgewählten grafischen Element zugordneten Teils der Steuereinrichtung zu konfigurieren.

Die Konfiguration des Vakuumgeräts erfolgt mit Hilfe der Anzeigeeinrichtung, die als grafische Benutzerschnittstelle fungiert. Hierbei werden ein oder mehrere grafische Elemente angezeigt, die durch den Benutzer zum Beispiel durch manuell gesteuertes Anklicken einfach ausgewählt werden können. Die grafischen Elemente sind vorzugsweise jeweils unterschiedlichen Teilen der Steuereinrichtung zugeordnet, sodass der Benutzer gezielt einzelne Teile der Steuereinrichtung konfigurieren kann. Auf diese Weise wird der Konfigurationsvorgang grafisch unterstützt, wobei die konfigurationsrelevante Struktur der Steuereinrichtung für den Benutzer leicht erfassbar ist. Der Konfigurationsvorgang ist somit insbesondere im Vergleich zu textbasierten oder andere abstrakten Konfigurationsumgebungen vereinfacht.

Zur verbesserten visuellen Identifikation der unterschiedlichen Teile der Steuereinrichtung wird das jeweilige grafische Element vorzugsweise mit einer grafischen Darstellung des betreffenden Teils der Steuereinrichtung versehen. Es ist auch möglich, dass das grafische Element jedenfalls aus der Sicht des Benutzers durch die grafische Darstellung selbst gebildet ist. Die grafische Darstellung vermittelt dem Benutzer ein intuitives Verständnis über den zugrunde liegenden Teil der Steuereinrichtung. Etwaige Zweifel, ob in einem jeweiligen Konfigurationsvorgang tatsächlich der beabsichtigte Teil der Steuereinrichtung konfiguriert wird, werden wirksam reduziert oder sogar vollständig ausgeschlossen. Dementsprechend wird auch das Risiko für eine fehlerhafte Konfiguration minimiert.

Bei dem Teil der Steuereinrichtung handelt es sich erfindungsgemäßg um einen physisch abgrenzbaren Teil der Steuereinrichtung, etwa ein Bauteil. Beispielsweise kann ein betreffender Teil der Steuereinrichtung ein Anschlussteil der Steuereinrichtung sein, d.h. ein Bereich, der einen oder mehrere Anschlüsse für elektrische Verbinder aufweist. In Betracht kommen jedoch auch funktional abgrenzbare Teile der Steuereinrichtung, die zum Beispiel lediglich virtuell, etwa auf einer Softwareebene der Steuereinrichtung angesiedelt sein können.

Die Steuereinrichtung kann insbesondere durch ein Bediengerät (z.B. eine digitale Steuereinheit des Vakuumgeräts) gebildet sein. Diese kann separat von einem Hauptbestandteil des Vakuumgeräts (z.B. Vakuumpumpe) und z.B. über Kabelverbinder mit dem Hauptbestandteil verbunden sein. Alternativ kann das Bediengerät auch integral, d.h. fest an dem Vakuumgerät ausgebildet sein.

Erfindungsgemäß umfasst die grafische Darstellung eine schematische Darstellung des zugeordneten Teils der Steuereinrichtung. Mit anderen Worten kann die grafische Darstellung von der tatsächlichen Beschaffenheit des betreffenden Teils der Steuereinrichtung abstrahiert sein. Dennoch wird die einfache Identifizierbarkeit durch den Benutzer gewährleistet. Je nach Komplexität der äußeren Beschaffenheit kann die schematische Darstellung die Identifizierbarkeit des betreffenden Teils sogar verbessern, weil überflüssige Details nicht dargestellt werden. Hierdurch kann die Konfiguration weiter vereinfacht werden. Die grafische Darstellung kann aus der Sicht des Benutzers auch durch die schematische Darstellung selbst gebildet sein, d.h. der Benutzer sieht lediglich die schematische Darstellung und wird mit Details, die für die Konfiguration des Vakuumgeräts in der Regel weniger hilfreich wären, nicht behelligt.

Die grafische Darstellung kann erfindungsgemäß auch Umrisse und/oder Kanten des betreffenden Teils der Steuereinrichtung umfassen oder hierauf beschränkt sein, um die wesentlichen geometrischen Eigenschaften des betreffenden Teils der Steuereinrichtung darzustellen. Auf diese Weise kann eine unvollständige schematische Darstellung erzielt werden, die je nach Anwendungsfall für die Identifizierbarkeit des Teils ausreichend sein kann.

Erfindungsgemäß umfasst die grafische Darstellung ein Abbild des betreffenden Teils der Steuereinrichtung. Dem Benutzer wird somit eine möglichst realistische Wiedergabe des äußeren Erscheinungsbilds des betreffenden Teils an der Anzeigeeinrichtung angezeigt. Dies ist insbesondere dann vorteilhaft, wenn der Benutzer die grafische Darstellung leicht mit der tatsächlichen Gegebenheit an der Steuereinrichtung visuell abgleichen kann. In diesem Fall kann der Benutzer also durch Vergleichen der tatsächlichen mit der angezeigten Version des betreffenden Teils diesen besonders leicht identifizieren und sodann konfigurieren. Eine möglichst realistische Visualisierung der Steuereinrichtung sorgt auch für eine intensive Nutzererfahrung, da der Kontrast zu abstrakten textbasierten Konfigurationssystemen besonders hoch ist.

Erfindungsgemäß ist der dem grafischen Element zugeordnete Teil der Steuereinrichtung ein Anschlussteil der Steuereinrichtung. Der Anschlussteil kann insbesondere eine Signalschnittstelle und/oder ein Relais der Steuereinrichtung aufweisen. Es können auch mehrere Signalschnittstellen vorgesehen sein, beispielsweise in Form standardisierter Anschlüsse für elektrische Steckverbinder. Jede der mehreren Signalschnittstellen kann einem jeweiligen grafischen Element zugeordnet sein, welches durch den Benutzer ausgewählt werden kann, um die betreffende Signalschnittstelle zu konfigurieren.

Die Signalschnittstelle kann dazu angepasst sein, digitale und/oder analoge Signale zu übertragen. Die Signalschnittstelle umfasst erfindungsgemäß eine serielle Signalschnittstelle. Mit anderen Worten wird durch grafische Elemente nicht nur eine summarische Konfiguration eines Anschlussteils ermöglicht, sondern auch die Konfiguration einzelner Signalleitungen (z.B. einzelne Pins eines elektrischen Steckverbinders). Beispielsweise können vordefinierte Muster für die einzelnen Signalleitungen eines seriellen Anschlusses festgelegt werden. Erfindungsgemäß ist hierzu ein sequenzielles Auswählen dergestalt vorgesehen, dass der Benutzer in einem ersten Schritt durch Auswählen eines grafischen Elements den gesamten seriellen Anschluss auswählt, wobei in einem zweiten Schritt die Funktion der einzelnen Signalleitungen des seriellen Anschlusses wiederum durch Auswählen von einem oder mehreren weiteren grafischen Elementen konfiguriert wird. Die weiteren grafischen Elemente umfassen erfindungsgemäß eine grafische Darstellung des seriellen Anschlusses oder eines Teils hiervon. Auf diese Weise bleibt der Benutzer darüber informiert, in welchem Teil der Steuereinrichtung der Konfigurationsprozess gerade stattfindet.

Der dem grafischen Element zugeordnete Teil der Steuereinrichtung ist erfindungsgemäß ein Funktionsteil der Steuereinrichtung, welcher nicht notwendigerweise einem physischen Bauteil oder Abschnitt der Steuereinrichtung entsprechen muss. Es ist also möglich, dass ein virtueller Teil der Steuereinrichtung grafisch dargestellt wird, und zwar vorzugsweise derart, dass die grafische Darstellung den Benutzer unmittelbar darüber informiert, welcher Teil der Steuereinrichtung durch das grafische Element repräsentiert wird.

Erfindungsgemäß ist vorgesehen, dass der dem grafischen Element zugeordnete Teil der Steuereinrichtung zumindest eine Datenquelle oder eine Datensenke repräsentiert. Eine jeweilige Datenquelle oder Datensenke kann hierbei mit einer Signalschnittstelle in Verbindung stehen oder lediglich funktional definiert sein. Endpunkte von gewünschten Signalleitungen können somit durch grafische Elemente ausgewählt werden und miteinander verknüpft werden.

Erfindungsgemäß definiert die Betriebsfunktion eine Verknüpfung des dem ausgewählten grafischen Element zugeordneten Teils der Steuereinrichtung mit einem weiteren Teil der Steuereinrichtung. Mit anderen Worten ist die Konfiguration des betreffenden Teils der Steuereinrichtung nicht auf diesen Teil beschränkt, sondern es können auch andere Teile der Steuereinrichtung, insbesondere Anschlüsse der Steuereinrichtung, berücksichtigt werden. Beispielsweise können Daten an einem weiteren Anschluss abgegriffen werden und in die Betriebsfunktion des betreffenden Teils integriert werden. Erfindungsgemäß ist der weitere Teil der Steuereinrichtung einem weiteren grafischen Element zugeordnet, welches an der Anzeigeeinrichtung angezeigt und ausgewählt wird, um die Betriebsfunktion zuzuweisen. Der Benutzer wird somit nicht nur bezüglich des betreffenden Teils der Steuereinrichtung grafisch unterstützt, sondern auch bezüglich des weiteren Teils der Steuereinrichtung. Die grafische Unterstützung des Konfigurationsprozesses kann daher sehr weitreichend ausgebildet sein.

Die Betriebsfunktion kann allgemein wenigstens eine Bedingung oder eine Transformation für den Betrieb des dem grafischen Element zugeordneten Teils der Steuereinrichtung definieren. Die Betriebsfunktion kann somit durchaus eine gewisse Komplexität aufweisen, die jedoch vorzugsweise grafisch aufbereitet wird und somit von dem Benutzer einfach festgelegt werden kann. Beispielsweise können dem Benutzer nach Auswählen des grafischen Elements ein oder mehrere Symbole angezeigt werden, die vordefinierte Bedingungen oder Transformationen repräsentieren. Hiernach kann der Benutzer einfach aus den Bedingungen oder Transformationen auswählen und ggf. mit gewünschten Parametern belegen.

Die Betriebsfunktion, welche durch den Benutzer zugewiesen wird, wird vorzugsweise dem Betrieb des Vakuumgeräts zugrunde gelegt. Die Betriebsfunktion bzw. die Gesamtheit aller Betriebsfunktionen bestimmen oder modifizieren somit die betrieblichen Eigenschaften des Vakuumgeräts. Die Betriebsfunktionen können auch als Betriebssoftware bezeichnet werden, durch die die einzelnen Hardwarekomponenten betrieben wird. Die Betriebsfunktion ist mithin ein Bestandteil der Software des Vakuumgeräts. Hierbei kann es sich insbesondere um eingebettete Software (Firmware) handeln.

Erfindungsgemäß umfasst der Schritt des Zuweisens der Betriebsfunktion, dass in Abhängigkeit des ausgewählten grafischen Elements mehrere vordefinierte Betriebsfunktionen und/oder Parameterwerte an der Anzeigeeinrichtung angezeigt werden, wobei der Benutzer die Betriebsfunktion aus den vordefinierten Betriebsfunktionen und/oder Parameterwerten auswählt, um die Betriebsfunktion zuzuweisen. Der Konfigurationsvorgang kann somit selbst für einen technischen Laien vergleichsweise einfach gestaltet werden, weil die Konfigurationsmöglichkeiten limitiert werden. Eine Limitierung der möglichen Konfigurationen durch vordefinierte Betriebsfunktionen bzw. Parameter kann jedoch auch für den geschulten Benutzer sehr hilfreich sein, um den Konfigurationsvorgang zu beschleunigen und um etwaige Fehler ausschließen zu können. Zusätzlich oder alternativ zu einer Auswahl aus vordefinierten Konfigurationen ist es erfindungsgemäß vorgesehen, dass der Benutzer eine oder mehrere der vordefinierten Betriebsfunktionen und/oder Parameterwerte modifiziert. Hierdurch wird der mögliche Umfang der Konfiguration erweitert, wobei gleichzeitig eine umständliche Neudefinition von Betriebsfunktionen vermieden wird.

Der Benutzer kann zusätzlich dadurch unterstützt werden, dass die vordefinierten Betriebsfunktionen zumindest teilweise durch Anzeigen einer markierten grafischen Darstellung des dem ausgewählten grafischen Element zugeordneten Teils der Steuereinrichtung visualisiert werden. Hierdurch kann die Betriebsfunktion selbst grafisch und mit direktem Bezug zum betreffenden Teil der Steuereinrichtung für den Benutzer aufbereitet werden. Die Konfiguration wird hierdurch nochmals weiter vereinfacht.

Erfindungsgemäß werden an der Anzeigeeinrichtung mehrere grafische Elemente angezeigt, wobei den grafischen Elementen jeweils eines von mehreren Teilen der Steuereinrichtung zugeordnet ist. Die grafischen Elemente werden erfindungsgemäß gleichzeitig an der Anzeigeeinrichtung angezeigt, sodass der Benutzer einen Überblick über mehrere Teile der Steuereinrichtung erhält. Er kann danach den von ihm benötigten Teil durch Auswählen eines der grafischen Elemente selektieren, um dann das betreffende Teil zu konfigurieren.

Gemäß einer weiteren Ausführungsform sind die mehreren grafischen Elemente einer von mehreren unterschiedlichen Gruppen von grafischen Elementen zugeordnet, d. h. die mehreren grafischen Elemente bilden eine Gruppe, die neben weiteren Gruppen existiert. Die einzelnen Gruppen repräsentieren unterschiedliche Bereiche der Steuereinrichtung, sodass die Gruppen die Steuereinrichtung technisch strukturieren. Dem Benutzer werden wahlweise die grafischen Elemente einer jeweiligen Gruppe gemeinsam angezeigt, um den betreffenden Bereich der Steuereinrichtung darzustellen. Zu einem jeweiligen Zeitpunkt wird vorzugsweise lediglich ein betreffender Bereich der Steuereinrichtung durch die zugehörigen grafischen Elemente dargestellt. Der Benutzer kann jedoch zwischen verschiedenen Bereichen wechseln und auf diese Weise die Anzeige unterschiedlicher Gruppen von grafischen Elementen aktivieren. Die konfigurationsrelevanten Bereiche der Steuereinrichtung werden somit separat angezeigt, um insbesondere solche Benutzer, die keine Experten sind, nicht zu überfordern. Überfrachtete Darstellungen werden somit wirksam vermieden.

Die unterschiedlichen Bereiche der Steuereinrichtung können jeweils insbesondere durch eine Außenseite der Steuereinrichtung gebildet sind. Hierdurch kann der Benutzer die Konfiguration der Steuereinrichtung sinnfällig abarbeiten, indem z.B. allen konfigurierbaren Teilen einer jeweiligen Außenfläche hintereinander eine jeweilige Betriebsfunktion zugewiesen wird. Die Gruppierung in Abhängigkeit von Außenseiten der Steuereinrichtung erlaubt eine intuitive Konfigurierung, da die Orientierung für den Benutzer in diesem Fall besonders leicht ist. Eine jeweilige Außenseite der Steuereinrichtung kann insbesondere einen oder mehrere Anschlüsse der Steuereinrichtung aufweisen, die vorzugsweise jeweils einem oder mehreren grafischen Elementen zugeordnet sind.

Gemäß einer weiteren Ausführungsform sind die mehreren grafischen Elemente an der Anzeigeeinrichtung in einer ersten Anordnung relativ zueinander angeordnet, wobei die mehreren, den grafischen Elementen zugeordneten Teile der Steuereinrichtung an der Steuereinrichtung in einer zweiten Anordnung relativ zueinander angeordnet sind, wobei die erste Anordnung zumindest im Wesentlichen gleich der zweiten Anordnung ist. Dies bedeutet, dass die Anordnung der grafischen Elemente an der Anzeigeeinrichtung mit der tatsächlichen Anordnung der zugeordneten Teile der Steuereinrichtung korrespondiert. Dies erleichtert dem Benutzer die kognitive Zuordnung der grafischen Elemente zu den tatsächlichen Teilen der Steuereinrichtung. Die erste und zweite Anordnung müssen jedoch nicht exakt einander entsprechen. Die Korrespondenz der betreffenden Elemente kann sich auch dann ergeben, wenn die Anordnungen durch Skalierung und/oder abschnittsweise Verschiebungen voneinander abweichen.

Gemäß einer weiteren Ausführungsform weist die Steuereinrichtung mehrere Module auf, wobei die mehreren Teile der Steuereinrichtung zumindest teilweise durch die Module gebildet sind. Die Steuereinrichtung kann beispielsweise mehrere Aufnahmefächer für Module aufweisen, die bedarfsweise, d. h. in Abhängigkeit der gewünschten Hardwarekonfiguration, in das Modul eingeschoben werden können. Ein jeweiliges Modul kann insbesondere einen oder mehrere Anschlüsse aufweisen, die an der Außenseite der Steuereinrichtung sichtbar sind, wenn das Modul an der Steuereinrichtung installiert ist. Dementsprechend kann ein jeweiliges Modul durch ein oder mehrere grafische Elemente zur einfachen Konfiguration an der Anzeigeeinrichtung visualisiert werden. Die grafischen Elemente können jeweils eine teilweise Darstellung des Moduls enthalten. Eine modulbezogene Definition der grafischen Elemente kann bei Änderungen von Modulen leicht angepasst werden und bietet insofern Vorteile im Hinblick auf die freie Konfigurierbarkeit von Vakuumgeräten.

Gemäß einer weiteren Ausführungsform umfasst das Vakuumgerät und/oder die Steuereinrichtung ein Gehäuse, wobei die Anzeigeeinrichtung an dem Gehäuse ausgebildet ist. Vorzugsweise ist die Anzeigeeinrichtung integral an dem Gehäuse ausgebildet, sodass das Vakuumgerät ohne weitere Hilfsmittel konfiguriert werden kann. Insbesondere ist kein Laptop oder dergleichen erforderlich, welcher erst umständlich an das Vakuumgerät angeschlossen werden müsste. Die Konfiguration kann auf diese Weise noch weiter vereinfacht werden. Vorzugsweise ist die Anzeigeeinrichtung berührungsempfindlich ausgebildet (touchscreen), sodass der Benutzer durch manuelle Betätigung der Anzeigeeinrichtung die Konfiguration zumindest teilweise vornehmen kann. Beispielsweise kann der Benutzer das grafische Element durch Drücken der Anzeigeeinrichtung an der Anzeigestelle auswählen. Alternativ oder ergänzend können manuelle Eingabegeräte mit dem Vakuumgerät verbunden sein.

Im Einklang mit den bisherigen Ausführungen wird ein Vakuumgerät, insbesondere Vakuumpumpensystem, bereitgestellt. Das Vakuumgerät ist mit einer Steuereinrichtung und einer Anzeigeeinrichtung zur Konfiguration des Vakuumgeräts ausgestattet. Die Steuereinrichtung und die Anzeigeeinrichtung sind gemeinsam dazu angepasst, das Verfahren nach einem der vorstehend beschriebenen Ausführungsformen erfindungsgemäß auszuführen. Beispielhafte Ausführungsformen und Funktionen der vorliegenden Offenbarung werden nachfolgend in Verbindung mit den Zeichnungen erläutert, wobei
Fig. 1 eine schematische Darstellung eines Vakuumgeräts mit einer Steuereinrichtung zeigt;
Fig. 2 Perspektivansichten einer Vorderseite (Fig. 2a) sowie einer Rückseite (Fig. 2b) einer Steuereinrichtung zeigt;
Fig. 3 Draufsichten der Vorderseite von Fig. 2 zeigt, wobei in der Anzeigeeinrichtung die Vorderseite (Fig. 3a) und die Rückseite (Fig. 3b) dargestellt werden;
Fig. 4 weitere Draufsichten der Vorderseite von Fig. 2 während einer Konfiguration des Vakuumgeräts von Fig. 1 zeigt, wobei die Vorderseite in der Anzeigeeinrichtung vor (Fig. 4a) und nach (Fig. 4b) der Auswahl eines grafischen Elements dargestellt wird; und
Fig. 5 eine weitere Draufsicht der Vorderseite von Fig. 2 während der Konfiguration des Vakuumgeräts von Fig. 1 zeigt.

In den Figuren werden sich entsprechende Teile durch dieselben Bezugszeichen gekennzeichnet.

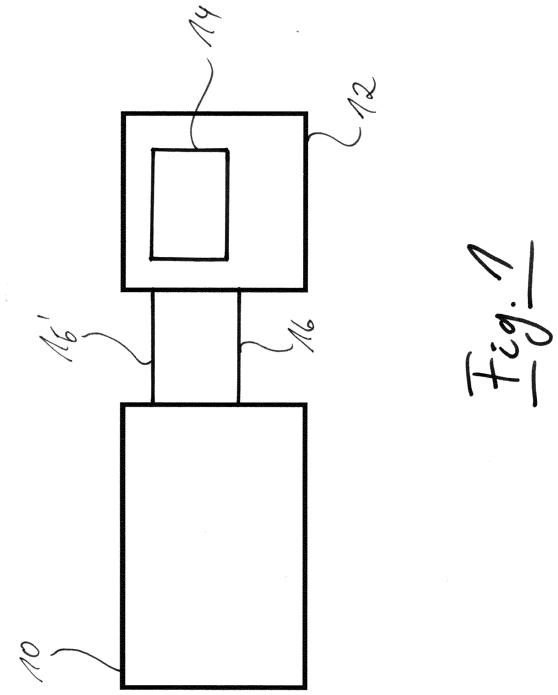

Fig. 1 zeigt ein Vakuumpumpensystem mit einer Vakuumpumpe 10 und einer Steuereinrichtung 12. Die Steuereinrichtung 12 ist über Verbindungsleitungen 16,16' mit der Vakuumpumpe 10 verbunden. Die Verbindungsleitungen 16,16' können bidirektional oder unidirektional ausgebildet sein. Beispielsweise kann die Leitung 16 Steuerungsignale von der Steuereinrichtung 12 zu der Vakuumpumpe 10 übertragen und die Leitung 16' kann Sensorsignale in umgekehrter Richtung übertragen. Es kann auch lediglich eine der Leitungen 16 vorgesehen sein. Denkbar ist auch eine drahtlose Anbindung.

Die Steuereinrichtung 12 ist mit einer Anzeigeeinrichtung 14 ausgestattet, die insbesondere berührungsempfindlich, etwa als sogenannter touchscreen ausgebildet sein kann. Ein nicht gezeigter Benutzer kann hierüber die Steuereinrichtung 12 und/oder die Vakuumpumpe 10, mithin also das Vakuumpumpensystem oder Bestandteile hiervon konfigurieren. Die Steuereinrichtung 12 bildet eine Bedieneinheit (digital control unit) für die Vakuumpumpe 10.

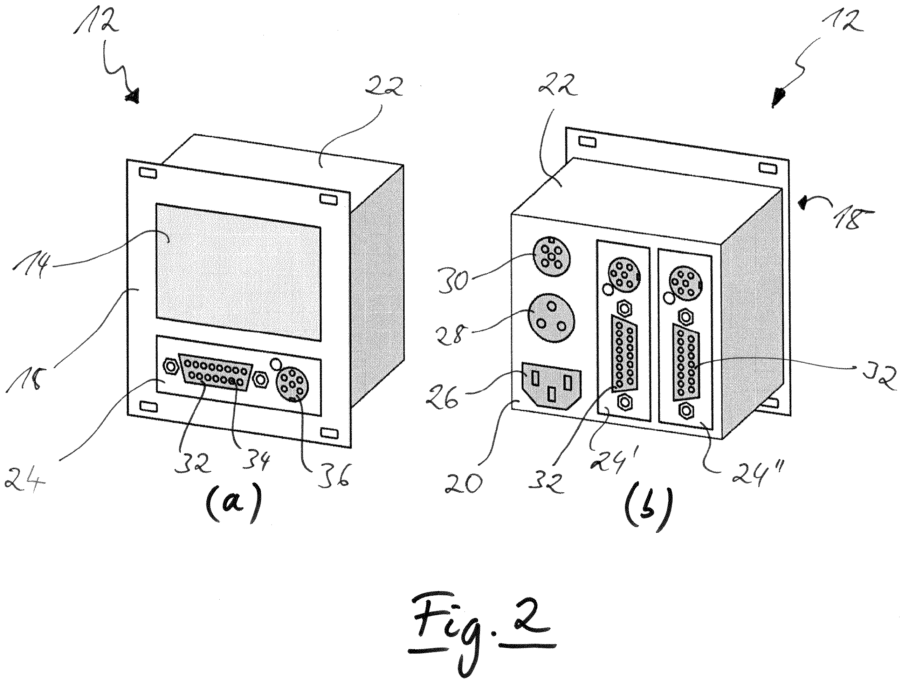

In Fig. 2 sind zwei verschiedene Perspektivansichten der Steuereinrichtung 12 in einer konkreten Ausgestaltung gezeigt. In Fig. 2a ist die Perspektive auf eine Vorderseite 18 der Steuereinrichtung 12 gerichtet. In Fig. 2b ist die Perspektive auf eine Rückseite 20 der Steuereinrichtung 12 gerichtet.

Die Steuervorrichtung 12 umfasst ein Gehäuse 22, wobei die Vorderseite 18 an einer Gehäuseplatte ausgebildet ist, welche gegenüber dem Gehäusekörper ein Übermaß aufweist (vgl. Fig. 2a). An der Vorderseite 18 ist ein Anschlussmodul 24 aufgenommen, welches eine Schnittstelle 32 sowie einen weiteren Anschluss 36 aufweist. Die Schnittstelle 32 umfasst mehrere Signalleitungsanschlüsse 34, die zur Aufnahme von Steckkontakten eines elektrischen Steckverbinders dienen (nicht gezeigt). Die Schnittstelle 32 ist zur Übertragung analoger und digitaler Signale geeignet und weist Relaiskontakte und Spannungsversorgungen auf.

Auf der Rückseite 20 der Steuereinrichtung 12 sind weitere Anschlüsse angeordnet. Es sind zwei Anschlussmodule 24' und 24" in das Gehäuse 22 eingesetzt, wobei die Anschlussmodule 24, 24" gegenüber der Anordnung des gleichartig ausgebildeten Anschlussmoduls 24 auf der Vorderseite 18 um 90° gedreht sind. Ferner sind an der Rückseite 20 ein elektrischer Anschluss 26 zur elektrischen Versorgung der Steuereinrichtung 12 sowie weitere Anschlüsse 28 und 30 vorgesehen. Die Anschlussmodule 24, 24', 24" sowie deren einzelne Anschlüsse bilden Teile der Steuereinrichtung 12. Ebenso bilden die Anschlüsse 26, 28 und 30 Teile der Steuereinrichtung 12. Ferner ist auch die Anzeigeeinrichtung 14 ein Teil der Steuereinrichtung 12. Es versteht sich, dass die Anordnung der Anschlussmodule 24, 24', 24" lediglich beispielhaft ist. Es können auch andere Anordnungen verwirklicht sein.

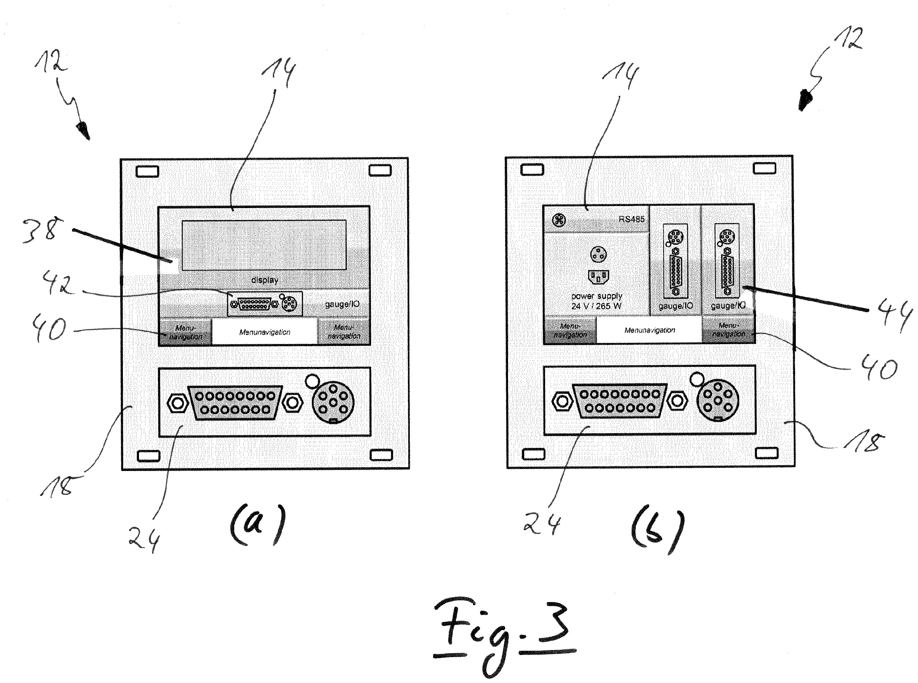

Fig. 3 zeigt zwei Draufsichten auf die Vorderseite 18 der Steuereinrichtung 12 bei eingeschalteter Anzeigeeinrichtung 14. In Fig. 3a wird an der Anzeigeeinrichtung 14 eine Anzeigefassung 38 der Vorderseite 18 angezeigt. Die Anzeigefassung 38 entspricht im Wesentlichen einem schematischen Abbild der Vorderseite 18, wobei jedoch das äußere, für den Benutzer sichtbare Erscheinungsbild des Anschlussmoduls 24 an der Vorderseite 18 detailgetreu durch eine grafische Darstellung 42 wiedergegeben wird. Unterhalb der Anzeigefassung 38 wird ein Menü 40 angezeigt, welches den Benutzer bei der Konfiguration unterstützt, indem beispielsweise zwischen verschiedenen Anzeigeinhalten gewechselt werden kann. Der Benutzer kann anhand der Anzeigefassung 38 leicht das Anschlussmodul 24 identifizieren, welches einem Teil der Steuereinrichtung 12 entspricht, der konfiguriert werden kann. Die grafische Darstellung 42 des Anschlussmoduls 24 bildet ein grafisches Element, welches durch den Benutzer ausgewählt werden kann, um das Anschlussmodul 24 zu konfigurieren. Dies wird im Folgenden weiter erläutert.

In Fig. 3b wird an der Anzeigeeinrichtung 14 eine Anzeigefassung 44 der Rückseite 20 der Steuereinrichtung 12 angezeigt. Ähnlich wie im Fall von Fig. 3a werden die rückseitigen Anschlüsse, die im Zusammenhang mit Fig. 3b erläutert worden sind, durch detailgetreue grafische Darstellungen an der Anzeigeeinrichtung 14 für den Benutzer leicht erkennbar. Zusätzlich können wie in Fig. 3b dargestellt schriftliche Bezeichnungen der Anschlüsse angezeigt werden, um dem Benutzer das Konfigurieren weiter zu erleichtern. Mit anderen Worten kann die Anzeigefassung 44 mit Bezeichnungen versehen sein, um Informationen über die dargestellten Teile der Steuereinrichtung 12 anzugeben. Diese Informationen müssen daher nicht herkömmlich durch Etiketten unmittelbar an den betreffenden Teilen angebracht werden, welche sich häufig im Laufe der Zeit lösen oder aufgrund von Alterungsprozessen schlecht lesbar sein können. Die Anzeigefassung 44 ist somit gegenüber der tatsächlichen Erscheinung der Rückseite 20 um weitere Informationen ergänzt ("augmented reality"). Selbiges ist für die Anzeigefassung 38 verwirklicht, vgl. "gauge I/O" in Fig.3b.

Es ist erkennbar, dass die tatsächliche Anordnung der Anschlüsse auf der Rückseite 20 (vgl. Fig. 2b) mit der virtuellen Anordnung der Anschlüsse in der Anzeigefassung 44 korrespondiert (vgl. Fig. 3b). Einzelne Verschiebungen, wie zum Beispiel des Anschlusses 30, sind unproblematisch, weil sie die unmittelbare Identifizierbarkeit der Rückseite 20 und der einzelnen Anschlüsse nicht negativ beeinflussen. Weiterhin wird unterhalb der Anzeigefassung 44 das Menü 40 angezeigt.

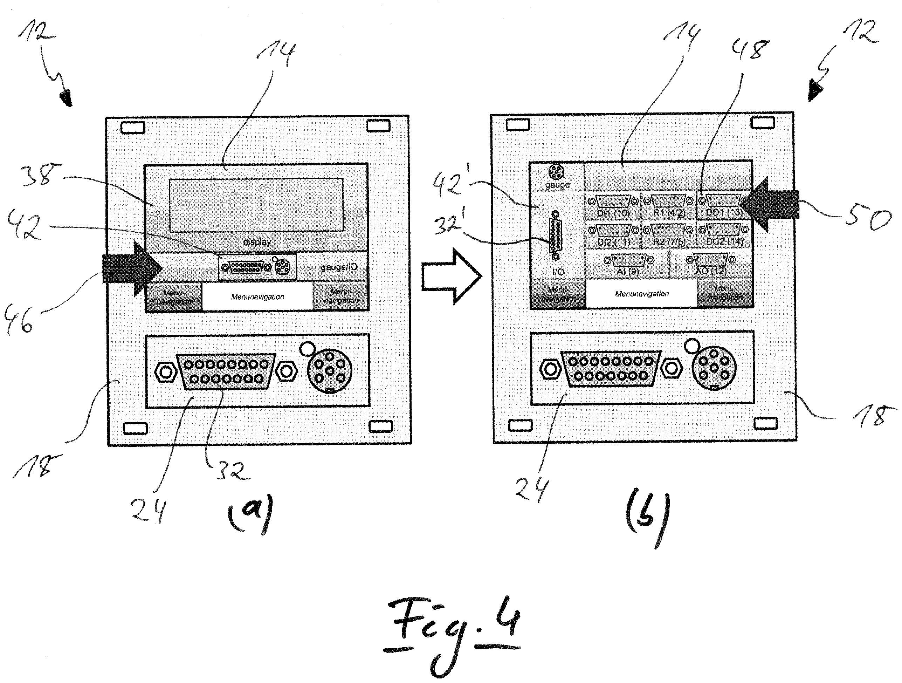

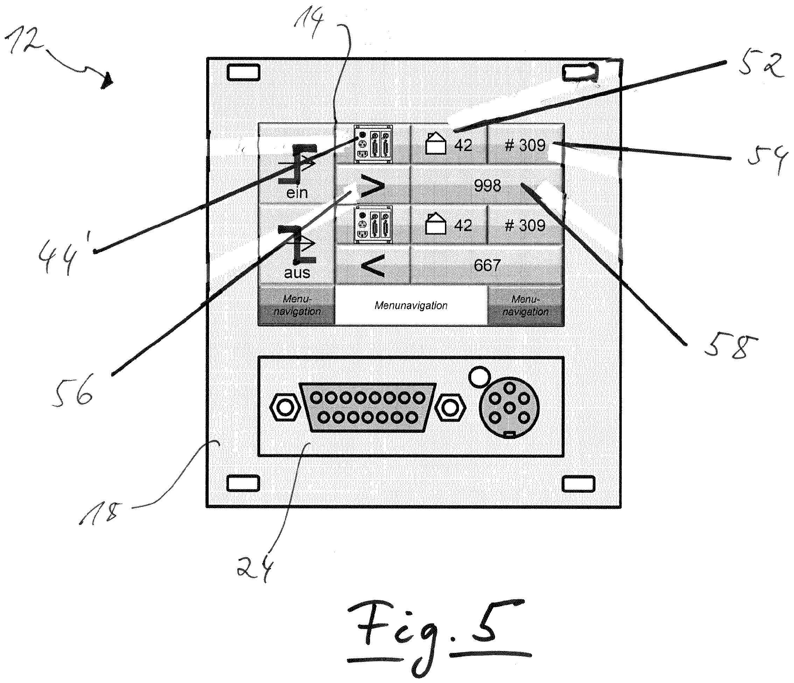

Anhand der Fig. 4 und 5 wird nachfolgend ein Beispiel zur Konfiguration der Steuereinrichtung 12 erläutert. Fig. 4a entspricht Fig. 3a, wobei der Benutzer zur Konfiguration des Anschlussmoduls 24 die entsprechende grafische Darstellung 42 in der Anzeigefassung 38 auswählt. Dies ist in Fig. 4a durch den Pfeil 46 angedeutet. Das Auswählen kann beispielsweise durch Antippen der grafischen Darstellung 42 mittels eines Fingers erfolgen. Alternativ können nicht gezeigte Eingabegeräte verwendet werden, um die Darstellung 42 auszuwählen bzw. zu selektieren. Denkbar ist auch eine Sprachsteuerung. Es ist erkennbar, dass die grafische Darstellung 42 das Anschlussmodul 24 abbildet, d.h. beide Anschlüsse 32 und 36 sind erfasst. Denkbar ist jedoch auch, dass für die einzelnen Anschlüsse 32, 36 eine jeweilige grafische Darstellung vorgesehen ist.

Als Reaktion auf die von dem Benutzer getätigte Auswahl ändert sich der Inhalt, welcher an der Anzeigeeinrichtung 14 angezeigt wird. Dies ist in Fig. 4b für den Fall dargestellt, dass eine grafische Darstellung 32' der Schnittstelle 32 in einer weiteren Anzeigefassung 42' des Anschlussmoduls 24 ausgewählt ist. Hierbei werden mehrere Schnittstellenkonfigurationen für die Schnittstelle 32 angezeigt. Beispielhaft wählt der Benutzer die Schnittstellenkonfiguration 48 aus (vgl. Pfeil 50). Das Auswählen erfolgt entsprechend zu dem Auswählen der Darstellung 42 aus Fig. 4a.

Eine jeweilige Schnittstellenkonfiguration wird durch eine markierte grafische Darstellung der Schnittstelle 32 visualisiert. Es ist z.B. erkennbar, dass die Schnittstellenkonfiguration 48 mit einer vordefinierten Belegung einzelner Signalleitungen 32 einhergeht. Die gezeigte Schnittstellenkonfiguration 48 legt fest, dass ein Signal unter einer bestimmten Bedingung ausgegeben werden soll.

Am linken Rand der Anzeigeeinrichtung 14 wird weiterhin die weitere grafische Darstellung 42' des Anschlussmoduls 24 angezeigt. Der Benutzer hat dadurch eine gute Übersicht darüber, welcher Teil des Anschlussmoduls 24 aktuell zur Konfiguration ausgewählt ist.

Als Reaktion auf die mit dem Pfeil 50 angedeutete benutzerseitige Auswahl ändert sich nochmals der an der Anzeigeeinrichtung 14 angezeigte Inhalt. Dies ist in Fig. 5 gezeigt. Der Benutzer kann nun zwei Bedingungen festlegen, unter denen gemäß der Schnittstellenkonfiguration 48 ein Signal ausgegeben wird. Es wird zum einen eine Einschaltbedingung für die Ausgabe des Signals in Abhängigkeit der Drehzahl der Vakuumpumpe 10 definiert. Die Drehzahl wird mit einer Parameternummer 54 identifiziert, welche beispielhaft die Nummer 309 besitzt. Des Weiteren ist eine Geräteadresse 52 vorgesehen, welche beispielhaft den Wert 42 aufweist. Die Geräteadresse identifiziert den Anschluss, an welchem der Drehzahlwert empfangen bzw. ausgelesen wird. Die Auswahl dieses Anschlusses erfolgt wiederum grafisch und vorzugsweise entsprechend zu der Auswahl des Anschlusses 24 anhand der Anzeigefassung 44 der Rückseite 20. Im vorliegenden Fall wird der Anschluss 30 (vgl. Fig. 2b) ausgewählt. Dies ist in einer in Fig. 5 ebenfalls angezeigten grafischen Miniaturdarstellung 44' der Rückseite 20 durch Markierung des Anschlusses 30 visualisiert. Der Benutzer erkennt somit leicht die Korrespondenz zwischen der Geräteadresse 42 und dem zugehörigen Anschluss 30.

Der Benutzer kann nun durch Angabe eines Vergleichsoperators 56 und eines Vergleichswerts 58 festlegen, dass das Signal über den Anschluss 24 gemäß der Schnittstellenkonfiguration 48 ausgegeben werden soll, wenn der Drehzahlwert größer als der Vergleichswert 58, d.h. 998 Hz ist. Die Abschaltbedingung wird auf dieselbe Art und Weise festgelegt, wobei gemäß der beispielhaften Bedingung kein Signal ausgegeben wird, wenn der Drehzahlwert kleiner als 667 Hz ist. Die Schnittstellenkonfiguration 48 und die zugehörigen Ein- und Ausschaltbedingungen legen zusammen eine Betriebsfunktion der Schnittstelle 32 fest. Der Schnittstelle wird somit über die Auswahl der zugeordneten grafischen Darstellung 42 eine Betriebsfunktion zugewiesen. Im Betrieb des Vakuumpumpensystems wird die Schnittstelle 32 dann gemäß der zugewiesenen Betriebsfunktion betrieben. Die Betriebsfunktion kann zu diesem Zweck in einem Speicher der Steuereinrichtung 32 gespeichert sein.

Es ist zu erkennen, dass die Konfiguration der Steuereinrichtung 12 durch die grafische Aufbereitung an der Anzeigeeinrichtung 14 stark vereinfacht wird. Somit können auch Benutzer, die keine Experten sind, die Konfiguration über die Anzeigeeinrichtung 14 schnell und fehlerfrei vornehmen.

### Bezuqszeichenliste

- 10: Vakuumpumpe
- 12: Steuereinrichtung
- 14: Anzeigeeinrichtung
- 16, 16': Verbindung
- 18: Vorderseite
- 20: Rückseite
- 22: Gehäuse
- 24, 24', 24": Anschlussmodul
- 26: Stromanschluss
- 28: Anschluss
- 30: Anschluss
- 32: Schnittstelle
- 32': grafische Darstellung der Schnittstelle
- 34: Signalleitungsanschluss
- 36: Anschluss
- 38: Anzeigefassung der Vorderseite
- 40: Menü
- 42, 42': grafische Darstellung
- 44: Anzeigefassung der Rückseite
- 46: Auswahlpfeil
- 48: Schnittstellenkonfiguration
- 50: Auswahlpfeil
- 52: Geräteadresse
- 54: Parameternummer
- 56: Vergleichsoperator
- 58: Vergleichswert

## Patentansprüche

1. Verfahren zum Konfigurieren eines Vakuumgeräts (10), insbesondere eines Vakuumpumpsystems, wobei das Vakuumgerät (10) eine Steuereinrichtung (12) und eine Anzeigeeinrichtung (14) aufweist, wobei das Verfahren folgende Schritte umfasst:
- Anzeigen wenigstens eines grafischen Elements (42) an der Anzeigeeinrichtung;
- Auswählen des grafischen Elements (42), um ein ausgewähltes grafisches Element zu bestimmen;
- Zuweisen einer Betriebsfunktion (48) zu dem ausgewählten grafischen Element, um das Vakuumgerät (10) bezüglich des dem ausgewählten grafischen Element (42) zugeordneten Teils (32) der Steuereinrichtung (12) zu konfigurieren, wobei dem grafischen Element (42) ein Teil (32) der Steuereinrichtung (12) zugeordnet ist, wobei es sich bei dem Teil (32) der Steuereinrichtung um einen physisch abgrenzbaren Teil der Steuereinrichtung handelt, wobei der Schritt des Zuweisens der Betriebsfunktion umfasst, dass in Abhängigkeit des ausgewählten grafischen Elements (42) mehrere vordefinierte Betriebsfunktionen (28) und/oder Parameterwerte (52, 54, 58) an der Anzeigeeinrichtung (14) angezeigt werden, wobei der Benutzer die Betriebsfunktion aus den vordefinierten Betriebsfunktionen und/oder Parameterwerten auswählt und/oder wobei der Benutzer eine oder mehrere der vordefinierten Betriebsfunktionen und/oder Parameterwerte modifiziert, um die Betriebsfunktion zuzuweisen,
wobei die Betriebsfunktion eine Verknüpfung des dem ausgewählten grafischen Element zugeordneten Teils (32) der Steuereinrichtung (12) mit einem weiteren Teil (30) der Steuereinrichtung (12) definiert, wobei der weitere Teil (30) der Steuereinrichtung (12) einem weiteren grafischen Element (44') zugeordnet ist, welches an der Anzeigeeinrichtung (14) angezeigt und ausgewählt wird, um die Betriebsfunktion zuzuweisen, wobei an der Anzeigeeinrichtung (14) mehrere grafische Elemente angezeigt werden, und wobei den grafischen Elementen jeweils eines von mehreren Teilen der Steuereinrichtung (12) zugeordnet ist, wobei die grafischen Elemente gleichzeitig an der Anzeigeeinrichtung (14) angezeigt werden, wobei das grafische Element (42) eine grafische Darstellung zumindest des dem grafischen Element zugeordneten Teils (32) der Steuereinrichtung (12) enthält,
wobei die grafische Darstellung eine schematische Darstellung des betreffenden Teils (32) der Steuereinrichtung (12) umfasst und/oder
die grafische Darstellung Umrisse und/oder Kanten des betreffenden Teils (32) der Steuereinrichtung (12) umfasst und/oder
die grafische Darstellung ein Abbild des betreffenden Teils (32) der Steuereinrichtung (12) umfasst,
wobei der dem grafischen Element (42) zugeordnete Teil der Steuereinrichtung (12) eine Signalschnittstelle (32) aufweist, wobei die Signalschnittstelle eine serielle Signalschnittstelle umfasst, wobei ein sequenzielles Auswählen dergestalt erfolgt, dass ein Benutzer in einem ersten Schritt durch Auswählen eines grafischen Elements die gesamte serielle Schnittstelle auswählt, wobei in einem zweiten Schritt die Funktion der einzelnen Signalleitungen der seriellen Schnittstelle wiederum durch Auswählen von einem oder mehreren weiteren grafischen Elementen konfiguriert wird, wobei die weiteren grafischen Elemente eine grafische Darstellung der seriellen Schnittstelle oder eines Teils hiervon umfassen.

2. Verfahren nach Anspruch 1,
wobei die Signalschnittstelle dazu angepasst ist, digitale und/oder analoge Signale zu übertragen, insbesondere wobei die Signalschnittstelle eine serielle Signalschnittstelle (32) oder eine einzelne Signalleitung (34) hiervon umfasst.

3. Verfahren nach zumindest einem der vorhergehenden Ansprüche,
wobei die Betriebsfunktion wenigstens eine Bedingung oder eine Transformation für den Betrieb des dem grafischen Element zugeordneten Teils der Steuereinrichtung (12) definiert
und/oder wobei die Betriebsfunktion dem Betrieb des Vakuumgeräts (10) zugrunde gelegt wird.

4. Verfahren nach zumindest einem der vorhergehenden Ansprüche, wobei die vordefinierten Betriebsfunktionen zumindest teilweise durch Anzeigen einer markierten grafischen Darstellung (48) des dem ausgewählten grafischen Element zugeordneten Teils (32) der Steuereinrichtung (12) visualisiert werden.

5. Verfahren nach zumindest einem der vorstehenden Ansprüche, wobei die mehreren grafischen Elemente einer von mehreren unterschiedlichen Gruppen von grafischen Elementen zugeordnet sind, wobei die grafischen Elemente zwischen den mehreren Gruppen unterschiedliche Bereiche der Steuereinrichtung (12) repräsentieren, und wobei wahlweise die grafischen Elemente einer jeweiligen Gruppe gemeinsam angezeigt werden, um den betreffenden Bereich der Steuereinrichtung darzustellen, wobei die unterschiedlichen Bereiche jeweils insbesondere durch eine Außenseite (18, 20) der Steuereinrichtung (12) gebildet sind, die einen oder mehrere Anschlüsse (32, 26, 28, 30) der Steuereinrichtung (12) aufweist.

6. Verfahren nach zumindest einem der vorstehenden Ansprüche, wobei die mehreren grafischen Elemente an der Anzeigeeinrichtung (14) in einer ersten Anordnung (44) relativ zueinander angeordnet sind, wobei die mehreren, den grafischen Elementen zugeordneten Teile (24', 24", 26, 28, 30) der Steuereinrichtung (12) an der Steuereinrichtung (12) in einer zweiten Anordnung relativ zueinander angeordnet sind, wobei die erste Anordnung (44) zumindest im Wesentlichen gleich der zweiten Anordnung ist.

7. Verfahren nach zumindest einem der vorstehenden Ansprüche,
wobei die Steuereinrichtung (12) mehrere Module (24, 24', 24") aufweist und die mehreren Teile der Steuereinrichtung (12) zumindest teilweise durch die Module gebildet sind.

8. Verfahren nach zumindest einem der vorhergehenden Ansprüche,
wobei das Vakuumgerät (10) und/oder die Steuereinrichtung (12) ein Gehäuse (22) umfasst, und wobei die Anzeigeeinrichtung (14) an dem Gehäuse (22) ausgebildet ist.

9. Vakuumgerät (10), insbesondere Vakuumpumpsystem, mit einer Steuereinrichtung (12) und einer Anzeigeeinrichtung (14) zur Konfiguration des Vakuumgeräts,
wobei die Steuereinrichtung (12) und die Anzeigeeinrichtung (14) gemeinsam dazu angepasst sind, das Verfahren nach einem der vorhergehenden Ansprüche auszuführen.

## Claims

1. A method of configuring a vacuum device (10), in particular a vacuum pump system, wherein the vacuum device (10) has a control device (12) and a display device (14),
wherein the method comprises the following steps:
- displaying at least one graphical element (42) at the display device;
- selecting the graphical element (42) to determine a selected graphical element; and
- assigning an operating function (48) to the selected graphical element to configure the vacuum device (10) with respect to the part (32) of the control device (12) associated with the selected graphical element (42), wherein a part (32) of the control device (12) is associated with the graphical element (42), wherein the part (32) of the control device is a physically delimitable part of the control device, wherein the step of assigning the operating function comprises a plurality of predefined operating functions (28) and/or parameter values (52, 54, 58) being displayed at the display device (14) in dependence on the selected graphical element (42), wherein the user selects the operating function from the predefined operating functions and/or parameter values, and/or wherein the user modifies one or more of the predefined operating functions and/or parameter values to assign the operating function,
wherein the operating function defines a link of the part (32) of the control device (12) associated with the selected graphical element to a further part (30) of the control device (12), wherein the further part (30) of the control device (12) is associated with a further graphical element (44') which is displayed and selected at the display device (14) to assign the operating function,
wherein a plurality of graphical elements are displayed at the display device (14), and wherein a respective one of a plurality of parts of the control device (12) is associated with the graphical elements, wherein the graphical elements are simultaneously displayed at the display device (14), wherein the graphical element (42) includes a graphical representation of at least the part (32) of the control device (12) associated with the graphical element,
wherein the graphical representation comprises a schematic representation of the respective part (32) of the control device (12) and/or
the graphical representation comprises outlines and/or edges of the respective part (32) of the control device (12) and/or
the graphical representation comprises an image of the respective part (32) of the control device (12),
wherein the part of the control device (12) associated with the graphical element (42) has a signal interface (32), wherein the signal interface comprises a serial signal interface, wherein a sequential selection takes place such that, in a first step, a user selects the total serial interface by selecting a graphical element, wherein, in a second step, the function of the individual signal lines of the serial interface is in turn configured by selecting one or more further graphical elements, wherein the further graphical elements comprise a graphical representation of the serial interface or of a part thereof.

2. A method in accordance with claim 1,
wherein the signal interface is adapted to transmit digital and/or analog signals, in particular wherein the signal interface comprises a serial signal interface (32) or a single signal line (34) thereof.

3. A method in accordance with at least one of the preceding claims,
wherein the operating function defines at least one condition or one transformation for the operation of the part of the control device (12) associated with the graphical element,
and/or wherein the operating function is based on the operation of the vacuum device (10).

4. A method in accordance with at least one of the preceding claims,
wherein the predefined operating functions are at least partly visualized by displaying a highlighted graphical representation (48) of the part (32) of the control device (12) associated with the selected graphical element.

5. A method in accordance with at least one of the preceding claims,
wherein the plurality of graphical elements are associated with one of a plurality of different groups of graphical elements, wherein the graphical elements between the plurality of groups represent different regions of the control device (12), and wherein, optionally, the graphical elements of a respective group are displayed together to represent the respective region of the control device,
wherein the different regions are each in particular formed by an outer side (18, 20) of the control device (12) which has one or more connectors (32, 26, 28, 30) of the control device (12).

6. A method in accordance with at least one of the preceding claims,
wherein the plurality of graphical elements are arranged in a first arrangement (44) relative to one another at the display device (14), wherein the plurality of parts (24', 24", 26, 28, 30) of the control device (12) associated with the graphical elements are arranged in a second arrangement relative to one another at the control device (12), wherein the first arrangement (44) is at least substantially the same as the second arrangement.

7. A method in accordance with at least one of the preceding claims,
wherein the control device (12) has a plurality of modules (24, 24', 24") and the plurality of parts of the control device (12) are at least partly formed by the modules.

8. A method in accordance with at least one of the preceding claims,
wherein the vacuum device (10) and/or the control device (12) comprises/comprise a housing (22), and wherein the display device (14) is formed at the housing (22).

9. A vacuum device (10), in particular a vacuum pump system, comprising a control device (12) and a display device (14) for configuring the vacuum device,
wherein the control device (12) and the display device (14) are jointly adapted to perform the method in accordance with any one of the preceding claims.

## Revendications

1. Procédé de configuration d'un appareil à vide (10), en particulier d'un système de pompe à vide, l'appareil à vide (10) comportant un dispositif de commande (12) et un dispositif d'affichage (14),
le procédé comprenant les étapes suivantes consistant à :
- afficher au moins un élément graphique (42) sur le dispositif d'affichage ;
- sélectionner l'élément graphique (42) pour déterminer un élément graphique sélectionné ;
- attribuer une fonction opérationnelle (48) à l'élément graphique sélectionné, afin de configurer l'appareil à vide (10) par rapport à la partie (32) du dispositif de commande (12) associée à l'élément graphique sélectionné (42), une partie (32) du dispositif de commande (12) étant associée à l'élément graphique (42), la partie (32) du dispositif de commande étant une partie physiquement dissociable du dispositif de commande,
l'étape d'attribution de la fonction opérationnelle comprenant l'affichage sur le dispositif d'affichage (14), en fonction de l'élément graphique (42) sélectionné, de plusieurs fonctions opérationnelles (28) et/ou valeurs de paramètres (52, 54, 58) prédéfinies, l'utilisateur sélectionnant la fonction opérationnelle parmi les fonctions opérationnelles et/ou valeurs de paramètres prédéfinies, et/ou l'utilisateur modifiant une ou plusieurs des fonctions opérationnelles et/ou valeurs de paramètres prédéfinies pour attribuer la fonction opérationnelle,
dans lequel
la fonction opérationnelle définit un lien de la partie (32) du dispositif de commande (12) associée à l'élément graphique sélectionné avec une autre partie (30) du dispositif de commande (12), l'autre partie (30) du dispositif de commande (12) étant associée à un autre élément graphique (44') qui est affiché sur le dispositif d'affichage (14) et est sélectionné pour attribuer la fonction opérationnelle,
plusieurs éléments graphiques sont affichés sur le dispositif d'affichage (14), et une partie parmi plusieurs parties du dispositif de commande (12) est associée à chacun des éléments graphiques, les éléments graphiques étant affichés simultanément sur le dispositif d'affichage (14), l'élément graphique (42) comprend une représentation graphique d'au moins la partie (32) du dispositif de commande (12) associée à l'élément graphique,
la représentation graphique comprend une représentation schématique de la partie concernée (32) du dispositif de commande (12), et/ou la représentation graphique comprend des contours et/ou des bords de la partie concernée (32) du dispositif de commande (12), et/ou la représentation graphique comprend une image de la partie concernée (32) du dispositif de commande (12),
la partie du dispositif de commande (12) associée à l'élément graphique (42) comprend une interface de signal (32), l'interface de signal incluant une interface de signal série, une sélection séquentielle s'effectuant de telle sorte que dans une première étape, un utilisateur sélectionne la totalité de l'interface série en sélectionnant un élément graphique, et dans une deuxième étape, la fonction des lignes de signal individuelles de l'interface série est à son tour configurée en sélectionnant un ou plusieurs autres éléments graphiques, les autres éléments graphiques incluant une représentation graphique de l'interface série ou d'une partie de celle-ci.

2. Procédé selon la revendication 1,
dans lequel l'interface de signal est adaptée pour transmettre des signaux numériques et/ou analogiques, en particulier l'interface de signal inclut une interface de signal série (32) ou une ligne de signal individuelle (34) de celle-ci.

3. Procédé selon l'une au moins des revendications précédentes,
dans lequel la fonction opérationnelle définit au moins une condition ou une transformation pour le fonctionnement de la partie du dispositif de commande (12) associée à l'élément graphique,
et/ou la fonction opérationnelle sert de base au fonctionnement de l'appareil à vide (10).

4. Procédé selon l'une au moins des revendications précédentes,
dans lequel les fonctions opérationnelles prédéfinies sont au moins partiellement visualisées en affichant une représentation graphique marquée (48) de la partie (32) du dispositif de commande (12) associée à l'élément graphique sélectionné.

5. Procédé selon l'une au moins des revendications précédentes,
dans lequel lesdits plusieurs éléments graphiques sont associés à un groupe parmi plusieurs groupes différents d'éléments graphiques, les éléments graphiques parmi lesdits plusieurs groupes représentent différentes zones du dispositif de commande (12), et
au choix, les éléments graphiques d'un groupe respectif sont affichés conjointement afin de représenter la zone concernée du dispositif de commande,
les différentes zones sont chacune formées en particulier par une face extérieure (18, 20) du dispositif de commande (12), qui comprend une ou plusieurs bornes de connexion (32, 26, 28, 30) du dispositif de commande (12).

6. Procédé selon l'une au moins des revendications précédentes,
dans lequel lesdits plusieurs éléments graphiques sont agencés sur le dispositif d'affichage (14) selon un premier agencement (44) les uns par rapport aux autres,
lesdites plusieurs parties (24', 24", 26, 28, 30) du dispositif de commande (12) associées aux éléments graphiques sont agencées sur le dispositif de commande (12) selon un deuxième agencement les unes par rapport aux autres, et
le premier agencement (44) est au moins sensiblement égal au deuxième agencement.

7. Procédé selon l'une au moins des revendications précédentes,
dans lequel le dispositif de commande (12) comprend plusieurs modules (24, 24', 24"), et lesdites plusieurs parties du dispositif de commande (12) sont formées au moins partiellement par les modules.

8. Procédé selon l'une au moins des revendications précédentes,
dans lequel l'appareil à vide (10) et/ou le dispositif de commande (12) comprend un boîtier (22), et
le dispositif d'affichage (14) est réalisé sur le boîtier (22).

9. Appareil à vide (10), en particulier système de pompe à vide, comportant un dispositif de commande (12) et un dispositif d'affichage (14) pour la configuration de l'appareil à vide,
dans lequel le dispositif de commande (12) et le dispositif d'affichage (14) sont adaptés conjointement pour mettre en oeuvre le procédé selon l'une des revendications précédentes.
